# EUROPEAN PATENT SPECIFICATION

(11) **EP 3 070 887 B1**
(45) Date of publication and mention of the grant of the patent: **09.08.2017**
(21) Application number: 13899291.2
(22) Date of filing: 11.12.2013
(51) Int. Cl.: H04L 12/761, H04L 29/12, H04L 12/18, H04L 12/46

(54) **COMMUNICATION METHOD, DEVICE AND SYSTEM FOR VIRTUAL EXTENSIBLE LOCAL AREA NETWORK**
KOMMUNIKATIONSVERFAHREN, VORRICHTUNG UND SYSTEM FÜR VIRTUELLES ERWEITERBARES LOKALES NETZWERK
PROCÉDÉ, DISPOSITIF ET SYSTÈME DE COMMUNICATION POUR RÉSEAU LOCAL EXTENSIBLE VIRTUEL

(43) Date of publication of application: 21.09.2016
(73) Proprietor: Huawei Technologies Co., Ltd., Longgang District Shenzhen, Guangdong 518129 (CN)
(72) Inventor: SONG, Yu, Shenzhen Guangdong 518129 (CN); XIONG, Zhiqiang, Shenzhen Guangdong 518129 (CN)
(74) Representative: Epping - Hermann - Fischer
(86) International application number: PCT/CN2013/089149
(87) International publication number: WO 2015/085523

(56) References cited:
- WO-A1-2013/152716
- WO-A1-2015/030882
- CN-A- 101 815 141
- CN-A- 102 970 227
- CN-A- 103 379 010
- MAHALINGAM STORVISOR D DUTT CUMULUS NETWORKS K DUDA ARISTA P AGARWAL BROADCOM L KREEGER CISCO M: "VXLAN: A Framework for Overlaying Virtualized Layer 2 Networks over Layer 3 Networks; draft-mahalingam-dutt-dcops-vxlan-06.txt", VXLAN: A FRAMEWORK FOR OVERLAYING VIRTUALIZED LAYER 2 NETWORKS OVER LAYER 3 NETWORKS; DRAFT-MAHALINGAM-DUTT-DCOPS-VXLAN-06.TXT, INTERNET ENGINEERING TASK FORCE, IETF; STANDARDWORKINGDRAFT, INTERNET SOCIETY (ISOC) 4, RUE DES FALAISES CH- 1205 GENEVA,, 6 November 2013 (2013-11-06), pages 1-24, XP015096050, [retrieved on 2013-11-06]

## Description

### TECHNICAL FIELD

Embodiments of the present invention relate to communications technologies, and in particular, to a communication method, apparatus, and system of a virtual extensible local area network.

### BACKGROUND

With the widespread application of a virtualization technology, VLAN (Virtual Local Area Network, virtual local area network) space on a data center network cannot meet requirements of the data center network on a virtual local area network. A virtual extensible local area network (Virtual eXtensible Local Area Network, VXLAN) technology extends network virtualization, to obtain a sufficient quantity of virtual networks, so as to meet user requirements.

On a VxLAN, a virtualized Layer 2 network is constructed on a physical Layer 3 network by using a tunneling port technology at a source virtual machine end, and a large quantity of virtual extensible local area networks are created on an existing network architecture. Different virtual extensible local area networks are identified by VNIs (VXLAN Network Identifier, virtual extensible local area network network identifier). Each VNI may include a maximum of 4094 VLANs, which extends a quantity of virtual local area networks.

An existing communication mode of the VxLAN is: A tunnel end point (VxLAN Tunnel Endpoint, VTEP) to which each virtual machine belongs implements, in a PIM (Protocol Independent Multicast, Protocol Independent Multicast) multicast manner, learning of a MAC address of a destination virtual machine and an IP address of the tunnel end point. After receiving a packet, a VTEP of a source virtual machine constructs an Internet Group Management Protocol (Internet Group Management Protocol, IGMP) packet, and then sends, in the PIM multicast manner, the IGMP packet to a destination VTEP corresponding to a destination VM. If the destination VTEP receives the IGMP packet, the destination VTEP parses the IGMP packet, and broadcasts a parsing result to the destination VM corresponding to the destination VTEP. A PIM multicast specification of a tunnel end point is relatively small, where 500 to 2000 multicast groups are generally supported; in addition, some tunnel end points may not support PIM multicast. However, the VxLAN may support 16 million VNIs according to a standard. Therefore, on the existing VxLAN network, because a quantity of multicast groups of tunnel end points is insufficient or multicast is not supported, a quantity of created VNIs is limited, which affects a quantity of virtual local area networks created on a data center network. In addition, a tunnel end point performs communication on a virtual local area network in a multicast manner, which needs to use relatively much network traffic and occupies relatively many network resources.

Document MAHALINGAM STORVISOR D DUTT CUMULUS NETWORKS K DUDA ARISTA P AGARWAL BROADCOM L KREEGER CISCO M: "VXLAN: A Framework for Overlaying Virtualized Layer 2 Networks over Layer 3 Networks; draft-mahalingam-dutt-dcops-vxlan-06.txt", VXLAN: A FRAMEWORK FOR OVERLAYING VIRTUALIZED LAYER 2 NETWORKS OVER LAYER 3 NETWORKS; DRAFT-MAHALINGAM-DUTT-DCOPS-VXLAN-06.TXT, INTERNET ENGINEERING TASK FORCE, IETF; STANDARDWORKINGDRAFT, INTERNET SOCIETY (ISOC) 4, RUE DES FALAISES CH- 1205 GENEVA, 6 November 2013 (2013-11-06), pages 1-24 relates to Virtual eXtensible Local Area Network (VXLAN), which is used to address the need for overlay networks within virtualized data centers accommodating multiple tenants. The scheme and the related protocols are suggested to be used in cloud service provider and enterprise data center networks.

### SUMMARY

Embodiments of the present invention put forward a communication method, apparatus, and system of a virtual extensible local area network, which can avoid using a multicast manner to perform communication between VTEPs on a VxLAN network.

According to a first aspect, an embodiment of the present invention puts forward a communication method of a virtual extensible local area network, where the virtual extensible local area network VxLAN includes a VxLAN centralized controller and multiple tunnel end points VTEPs, and the method includes:
intercepting, by a transmit-end VTEP, a broadcast packet sent by a transmit-end virtual machine;
determining, by the transmit-end VTEP, whether the broadcast packet does not have a destination address, and if determining that the broadcast packet does not have a destination address, acquiring, by the transmit-end VTEP, from the VxLAN centralized controller, an IP address of a receive-end VTEP on the VxLAN; and
encapsulating, by the transmit-end VTEP, the broadcast packet into a unicast packet according to the IP address of the receive-end VTEP, and sending the unicast packet to the receive-end VTEP, so that the receive-end VTEP broadcasts the received unicast packet to a receive end.

With reference to the first aspect, in a first possible implementation manner, the transmit-end VTEP sends a query request to the VxLAN centralized controller; and
the transmit-end VTEP receives a query response returned by the VxLAN centralized controller, where the query response carries IP addresses of all VTEPs on the VxLAN.

With reference to the first aspect, in a second possible implementation manner, the acquiring, by the transmit-end VTEP, from the VxLAN centralized controller, an IP address of a receive-end VTEP on the VxLAN includes:
sending, by the transmit-end VTEP, a query request to the VxLAN centralized controller; and
receiving, by the transmit-end VTEP, a query response returned by the VxLAN centralized controller, where the query response carries IP addresses of multiple receive-end VTEPs on the VxLAN, and the multiple receive-end VTEPs are obtained by the VxLAN centralized controller from all VTEPs on the VxLAN by means of screening according to a type of the broadcast packet or location information of the transmit-end VTEP.

With reference to the first aspect or the first or the second possible implementation manner of the first aspect, in a third possible implementation manner, the broadcast packet is a gratuitous Address Resolution Protocol ARP broadcast packet, and the method further includes:
reporting, by the transmit-end VTEP, to the VxLAN centralized controller, a source IP address and a source Media Access Control MAC address that are carried by the gratuitous ARP broadcast packet.

With reference to the first aspect or the first or the second possible implementation manner of the first aspect, in a fourth possible implementation manner, the broadcast packet is a DHCP broadcast packet, and the method further includes:
intercepting, by the transmit-end VTEP, a response packet sent by a DHCP server in response to the unicast packet, where the response packet carries an IP address assigned by the DHCP server to the transmit-end virtual machine and a MAC address, and reporting, by the transmit-end VTEP, to the VxLAN centralized controller, the IP address newly assigned to the transmit-end virtual machine and the MAC address.

According to a second aspect, an embodiment of the present invention puts forward a communication method of a virtual extensible local area network, where the virtual extensible local area network VxLAN includes a VxLAN centralized controller and multiple tunnel end points VTEPs, and the method includes:
receiving, by the VxLAN centralized controller, a query request sent by a transmit-end VTEP, where the query request is sent to the VxLAN centralized controller after the transmit-end VTEP intercepts a broadcast packet sent by a transmit-end virtual machine and determines that the broadcast packet does not have a destination address, and the query request carries an identifier of the VxLAN on which the transmit-end VTEP is located;
determining, by the VxLAN centralized controller, an IP address of a receive-end VTEP on the VxLAN according to the identifier of the VxLAN; and
sending, by the VxLAN centralized controller, a query response to the transmit-end VTEP, where the query response carries the IP address of the receive-end VTEP, so that the transmit-end VTEP encapsulates the broadcast packet into a unicast packet according to the IP address of the receive-end VTEP, and sends the unicast packet to the receive-end VTEP.

With reference to the second aspect, in a first possible implementation manner, the method further includes:
pre-configuring, by the VxLAN centralized controller, a correspondence between the identifier of the VxLAN network and IP addresses of all VTEPs on the VxLAN network; and
accordingly, querying, by the VxLAN centralized controller, the correspondence according to the identifier of the VxLAN, determining the IP addresses of all the VTEPs on the VxLAN, and sending a query response to the transmit-end VTEP, where the query response carries the IP addresses of all the VTEPs.

With reference to the second aspect, in a second possible implementation manner, the method further includes:
determining, by the VxLAN centralized controller, a type of the broadcast packet, and obtaining, by means of screening according to the type of the broadcast packet or location information of the transmit-end VTEP, multiple receive-end VTEPs from all the VTEPs on the VxLAN.

With reference to the second aspect or the first or the second possible implementation manner of the second aspect, in a third possible implementation manner.
the broadcast packet is a gratuitous ARP broadcast packet, and the method further includes:
   receiving, by the VxLAN centralized controller, a source IP address and a source Media Access Control MAC address that are carried by the gratuitous ARP broadcast packet and that are reported by the transmit-end VTEP; and
   storing, by the VxLAN centralized controller, the source IP address and the source MAC address.

With reference to the second aspect or the first or the second possible implementation manner of the second aspect, in a fourth possible implementation manner, the method further includes:
the broadcast packet is a DHCP broadcast packet, and the method further includes:
   receiving, by the VxLAN centralized controller, an IP address assigned by a DHCP server to the transmit-end virtual machine and a Media Access Control MAC address that are reported by the transmit-end VTEP; and
   storing, by the VxLAN centralized controller, the IP address newly assigned to the transmit-end virtual machine and the MAC address.

According to a third aspect, an embodiment of the present invention puts forward a communications system of a virtual extensible local area network, where the virtual extensible local area network VxLAN includes a VxLAN centralized controller and multiple tunnel end points VTEPs, and each VTEP and at least one virtual machine managed by the VTEP form a subnet of the VxLAN; where
a transmit-end VTEP is configured to intercept a broadcast packet sent by a transmit-end virtual machine, determine whether the broadcast packet does not have a destination address, and if determining that the broadcast packet does not have a destination address, acquire, from the VxLAN centralized controller, an IP address of a receive-end VTEP on the VxLAN, encapsulate the broadcast packet into a unicast packet according to the IP address of the receive-end VTEP, and send the unicast packet to the receive-end VTEP;
the VxLAN centralized controller is configured to receive a query request sent by the transmit-end VTEP, determine the IP address of the receive-end VTEP on the VxLAN, and send a query response to the transmit-end VTEP, where the query response carries the IP address of the receive-end VTEP; and
the receive-end VTEP is configured to receive the unicast packet sent by the transmit-end VTEP, and broadcast the received unicast packet to a receive end.

According to a fourth aspect, an embodiment of the present invention puts forward a communications apparatus of a virtual extensible local area network, where the virtual extensible local area network VxLAN includes a VxLAN centralized controller and multiple tunnel end points VTEPs, and the VTEP includes:
an interception unit, configured to intercept a broadcast packet sent by a transmit-end virtual machine;
a determining unit, configured to determine whether the broadcast packet does not have a destination address, and if determining that the broadcast packet does not have a destination address, acquire, from the VxLAN centralized controller, an IP address of a receive-end VTEP on the VxLAN; and
a sending unit, configured to encapsulate the broadcast packet into a unicast packet according to the IP address of the receive-end VTEP, and send the unicast packet to the receive-end VTEP, so that the receive-end VTEP broadcasts the received unicast packet to a receive end.

According to a fifth aspect, an embodiment of the present invention puts forward a communications apparatus of a virtual extensible local area network, where the virtual extensible local area network VxLAN includes a VxLAN centralized controller and multiple tunnel end points VTEPs, and the VxLAN centralized controller includes:
a receiving unit, configured to receive a query request sent by a transmit-end VTEP, where the query request is sent to the VxLAN centralized controller after the transmit-end VTEP intercepts a broadcast packet sent by a transmit-end virtual machine and determines that the broadcast packet does not have a destination address, and the query request carries an identifier of the VxLAN on which the transmit-end VTEP is located;
a determining unit, configured to determine an IP address of a receive-end VTEP on the VxLAN according to the identifier of the VxLAN; and
a sending unit, configured to send a query response to the transmit-end VTEP, where the query response carries the IP address of the receive-end VTEP, so that the transmit-end VTEP encapsulates the broadcast packet into a unicast packet according to the IP address of the receive-end VTEP, and sends the unicast packet to the receive-end VTEP.

According to the method, the apparatus, and the system provided in the embodiments of the present invention, a transmit-end VTEP can intercept a broadcast packet that does not have a destination address and that is sent by a transmit-end virtual machine, acquire an IP address list of a receive-end VTEP that belongs to a same VxLAN network as the transmit-end VTEP, encapsulate the broadcast packet into a unicast packet according to an IP address of the receive-end VTEP, and send, in a form of a unicast packet, an original packet in a form of the unicast packet, the original packet to another receive-end VTEP on the same VxLAN network. This can avoid using a multicast manner to perform communication between VTEPs on the VxLAN network, so that construction of the VxLAN network no longer depends on a multicast group quantity or multicast capability of a tunnel end point, which extends application of the VxLAN network.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a diagram of composition of a data center network according to an embodiment of the present invention;
FIG. 2 is a flowchart of a method according to an embodiment of the present invention;
FIG. 3 is a flowchart of another method according to an embodiment of the present invention;
FIG. 4 is a flowchart of another method according to an embodiment of the present invention;
FIG. 5 is a diagram of composition of a communications apparatus of a virtual extensible local area network according to an embodiment of the present invention;
FIG. 6 is a diagram of composition of another communications apparatus of a virtual extensible local area network according to an embodiment of the present invention; and
FIG. 7 is a diagram of composition of a computer according to an embodiment of the present invention.

### DESCRIPTION OF EMBODIMENTS

Embodiments of the present invention put forward a communication method, apparatus, and system of a virtual extensible local area network, which can avoid using a multicast manner to perform communication between VTEPs on a VxLAN network, so that construction of the VxLAN network no longer depends on a multicast group quantity or capability of a tunnel end point, which extends application of the VxLAN network.

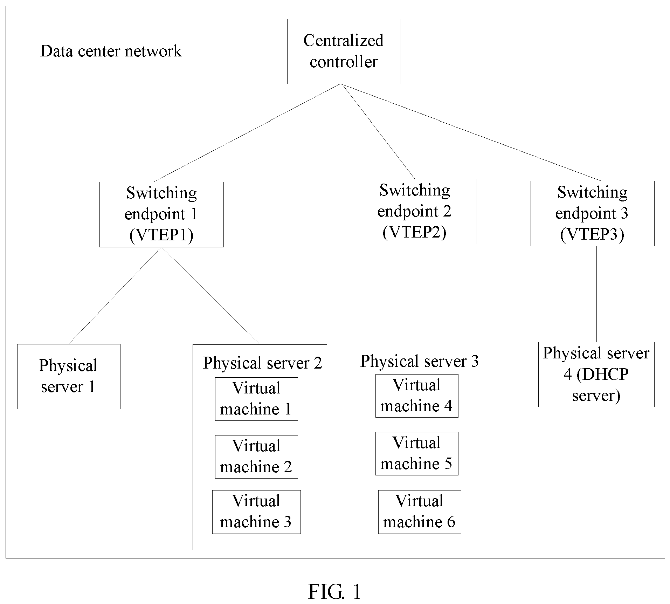

FIG. 1 is an architecture diagram of a data center network provided in an embodiment of the present invention. In FIG. 1, physical servers 1 to 4, a switching endpoint 1 (including VTEP1), a switching endpoint 2 (including VTEP2), and a switching endpoint 3 (including VTEP3) are located on one VxLAN network. The physical servers 2 and 3 include multiple virtual machines each, where the physical server 2 abstracts virtual machines 1, 2, and 3, and the physical server 3 abstracts virtual machines 4, 5, and 6. The physical server 4 is a Dynamic Host Configuration Protocol (Dynamic Host Configuration Protocol, DHCP) server and is configured to dynamically assign IP addresses to nodes on the network. The switching endpoint 1, the physical server 1, and the virtual machines in the physical server 2 constitute one subnet of the VxLAN network, the switching endpoint 2 and the virtual machines in the physical server 3 constitute another subnet of the VxLAN network, and the switching endpoint 3 and the physical server 4 constitute another subnet of the VxLAN network. A VTEP on each switching endpoint is configured to provide encapsulation and decapsulation capabilities for each host node on a VxLAN subnet to which the VTEP belongs, and record an identifier of a VxLAN subnet to which each host node belongs. In this embodiment, when host nodes on a subnet on which a VTEP is located are all virtual machines, each VTEP manages the virtual machines on the subnet on which the VTEP is located. In this embodiment of the present invention, a VxLAN centralized controller is further set on the VxLAN network, where the centralized controller stores a virtual extensible local area network VNI of each host node (the host node in this embodiment of the present invention may be a physical machine or may be a virtual machine) on the VxLAN network, and a correspondence between an address of each host node and an address of a VTEP corresponding to the host node, where the address may be an IP address and/or a Media Access Control MAC address. When a host node is started, a correspondence between a MAC address of each host node and an IP address of a VTEP corresponding to the host node is updated to the VxLAN centralized controller. When the host node needs to communicate with another host node, a switching endpoint on which the host node is located obtains, by querying the VxLAN centralized controller, a MAC address of a destination host, and an IP address and a MAC address of a VTEP of a switching endpoint to which the destination host is connected, so as to implement communication. Further, the VxLAN centralized controller may further record a correspondence between an IP address and a MAC address of each host node.

In this embodiment of the present invention, an example in which a host node is a virtual machine is used.

In a virtualization scenario, a virtual machine is often migrated dynamically. If migration across Layer 2 occurs, an IP address of the virtual machine needs to be changed. When the IP address of the virtual machine changes dynamically, some broadcast packets that do not have a destination address are generated, for example, a DHCP broadcast packet that is used to request a DHCP server on which migration occurs to assign a new IP address to a virtual machine on which migration occurs, or a gratuitous Address Resolution Protocol (Address Resolution Protocol, ARP) broadcast packet that is used to notify another host node on a same VxLAN network of a changed address of the local end. If this type of broadcast packet that does not have a destination address is sent in a multicast manner according to the prior art, a problem that a quantity of multicast groups of tunnel end points is insufficient or multicast is not supported may occur. According to this embodiment of the present invention, a broadcast packet that does not have a destination address can be converted into a unicast packet for forwarding.

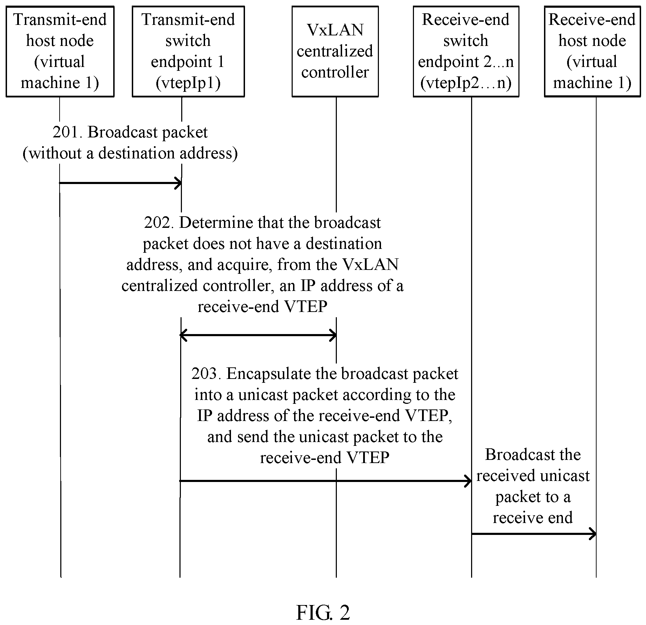

With reference to a system shown in FIG. 1, as shown in FIG. 2, a communication method of a virtual extensible local area network provided in an embodiment of the present invention includes the following steps:
S201. A transmit-end VTEP intercepts a broadcast packet sent by a transmit-end virtual machine. Specifically, after a virtual machine 1 sends a broadcast packet that does not have a destination address, a VTEP1 on a subnet on which the virtual machine 1 is located no longer uses, after receiving the broadcast packet, a multicast manner to send the broadcast packet.

S202. The transmit-end VTEP determines whether the broadcast packet does not have a destination address, and if determining that the broadcast packet does not have a destination address, the transmit-end VTEP acquires, from the VxLAN centralized controller, an IP address of a receive-end VTEP on the VxLAN.

Specifically, the VTEP1 sends a query request to the VxLAN centralized controller, where the query request carries an VNI of the VxLAN network on which the virtual machine 1 is located, and the VxLAN centralized controller acquires, according to the VNI, an IP address list of the receive-end VTEP on the VxLAN network, and returns the IP address list of the receive-end VTEP to the VTEP1.

Preferably, the VxLAN controller may determine an IP address list of multiple receive-end VTEPs on the VxLAN network, and return the IP address list of the multiple receive-end VTEPs to the VTEP1.

Preferably, determining of the multiple receive-end VTEPs on the VxLAN network may be relatively flexible. For example, the multiple receive-end VTEPs may be all VTEPs on the VxLAN network, VTEPs that are recorded in the centralized controller, VTEPs currently in an active state that are determined by the centralized controller, a VTEP that is determined by the centralized controller according to a preset selection policy and whose location is close to a location of a VTEP on which a source virtual machine is located, or a VTEP obtained by means of screening according to a type of a broadcast packet.

S203. The transmit-end VTEP encapsulates the broadcast packet into a unicast packet according to the IP address of the receive-end VTEP, and sends the unicast packets to the receive-end VTEP, so that the receive-end VTEP broadcasts the received unicast packet to a receive end.

Preferably, if addresses of multiple receive-end VTEPs are returned, the transmit-end VTEP encapsulates the broadcast packet into multiple unicast packets according to the IP addresses of the multiple receive-end VTEPs, and sends the multiple unicast packets to the receive-end VTEPs respectively, so that each receive-end VTEP broadcasts the received unicast packet to a receive end.

Specifically, the VTEP1 encapsulates content of the broadcast packet and the IP address of each receive-end VTEP into one unicast packet, where each unicast packet is corresponding to one receive-end VTEP, and sends, to each receive-end VTEP, a unicast packet corresponding to the address of the receive-end VTEP; after receiving the unicast packet, each receive-end VTEP broadcasts the unicast packet to each host node on a subnet on which the receive-end VTEP is located.

According to this embodiment of the present invention, a transmit-end VTEP can intercept a broadcast packet that does not have a destination address and that is sent by a transmit-end virtual machine, acquire an IP address list of a receive-end VTEP that belongs to a same VxLAN network as the transmit-end VTEP, encapsulate the broadcast packet into a unicast packet according to an IP address of the receive-end VTEP, and send, in a form of the unicast packet, the original packet to another receive-end VTEP on the same VxLAN network. This can avoid using a multicast manner to perform communication between VTEPs on the VxLAN network, so that construction of the VxLAN network no longer depends on a multicast group quantity or capability of a tunnel end point, which extends application of the VxLAN network.

In addition, when the IP address list of the multiple receive-end VTEPs returned by the centralized controller is an IP address list of all VTEPs on the VxLAN network, it can be ensured that the broadcast packet is sent to a receive end that should receive the broadcast packet, thereby ensuring correctness of sending and receiving. When the VxLAN centralized controller further parses the broadcast packet, and selects multiple receive-end VTEPs according to a parsing result and a preset selection policy, for example, selecting receive-end VTEPs according to location information, activation information, or a type of the broadcast packet, it is ensured that unicast sending is performed accordingly after a sending manner is changed from broadcast to unicast, thereby avoiding waste of resources.

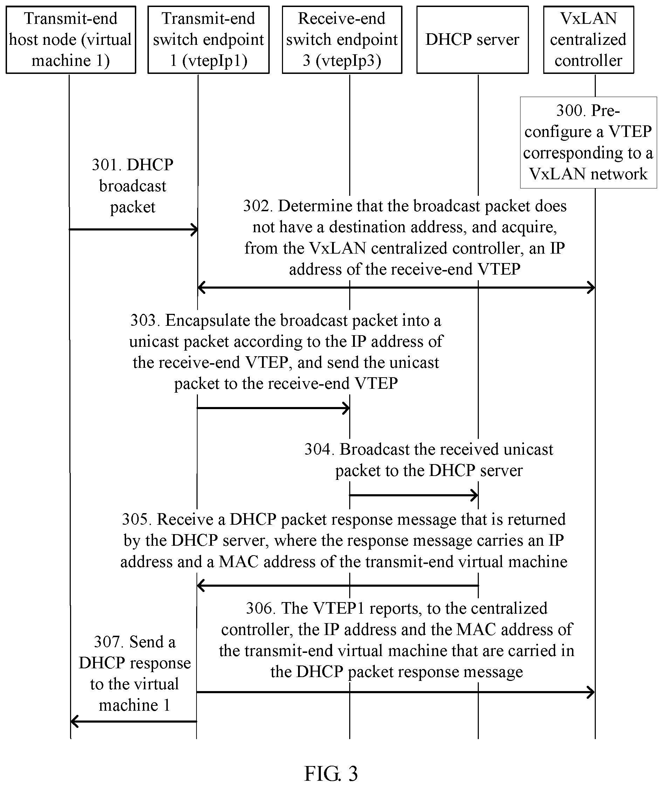

As shown in FIG. 3, the broadcast packet is a Dynamic Host Configuration Protocol DHCP broadcast packet. After migration occurs on a virtual machine 1, the virtual machine 1 originates a DHCP broadcast packet, to request a DHCP server on a network to assign a new IP address to the virtual machine 1. A communication method of a virtual extensible local area network provided in an embodiment of the present invention includes the following steps:
S300. Pre-configure a VTEP corresponding to a VxLAN network in a VxLAN centralized controller.
   Specifically, a correspondence between an identifier of the VxLAN network and IP addresses of all VTEPs on the VxLAN network is pre-configured in the VxLAN centralized controller.
S301. A virtual machine 1 originates a DHCP broadcast packet, and a receive-end VTEP1 intercepts the DHCP broadcast packet, where the DHCP broadcast packet does not include a destination IP address.
   Specifically, after the virtual machine 1 sends the broadcast packet that does not have a destination address, the VTEP1 on a subnet on which the virtual machine 1 is located no longer uses, after receiving the broadcast packet, a multicast manner to send the broadcast packet, which is referred to as "intercepting the broadcast packet" in this embodiment of the present invention.
S302. A transmit-end VTEP1 determines whether the DHCP broadcast packet includes a destination IP address, and if the DHCP broadcast packet does not include a destination IP address, the transmit-end VTEP1 acquires, from the VxLAN centralized controller, an IP address of a receive-end VTEP on a virtual extensible local area network on which the virtual machine 1 is located, that is, an IP address of a VTEP3 on a subnet on which a DHCP server is located. Specifically, the transmit-end VTEP1 sends a query request to the VxLAN centralized controller, where the query request carries an VNI of the VxLAN network on which the virtual machine 1 is located; and the VxLAN centralized controller queries, according to the VNI, the pre-configured correspondence, and acquires an IP address list, stored in the correspondence, of all VTEPs on the VxLAN network.
   The VxLAN centralized controller may return, to the VTEP1, the IP address list of all VTEPs that is configured in the correspondence. The VxLAN centralized controller may further analyze location information of the transmit-end VTEP1 (for example, analyzing an IP address of the VTEP1), determine a receive-end VTEP whose location is close to a location of the transmit-end VTEP1, and return, to the transmit-end VTEP1, an IP address list of the determined receive-end VTEP whose location is close to the location of the transmit-end VTEP1. The VxLAN centralized controller may further analyze a type of the broadcast packet, further obtain a receive-end VTEP by means of screening according to the type of the broadcast packet, and return, to the transmit-end VTEP1, an IP address list of the receive-end VTEP obtained by means of screening. In this embodiment, the VxLAN centralized controller analyzes the DHCP broadcast packet request, obtains, by means of screening, a receive-end VTEP3 that manages the DHCP server on the VxLAN network, and returns, to the VTEP1, the IP address of the receive-end VTEP3 obtained by means of screening.
S303. The transmit-end VTEP1 encapsulates the broadcast packet into a unicast packet according to the IP address of the VTEP3 on which the DHCP server is located, and sends the unicast packet to the VTEP3 on which the DHCP server is located.
S304. The VTEP3 on which the DHCP server is located forwards the DHCP packet request to the DHCP server, and the receive-end VTEP3 on which the DHCP server is located receives a DHCP packet response message, where the DHCP packet response message carries an IP address that is newly assigned by the DHCP server to a transmit-end virtual machine and a MAC address of the transmit-end virtual machine, and forwards the received DHCP packet response message to the VTEP1.
S305. The transmit-end VTEP1 receives the DHCP packet response message sent by the DHCP server, where the DHCP packet response message carries the IP address, assigned by the DHCP server, of the transmit-end virtual machine and the MAC address.
S306. The transmit-end VTEP1 intercepts the DHCP packet response message, and reports the IP address and the MAC address of the transmit-end virtual machine to the VxLAN centralized controller, so that the VxLAN centralized controller stores the IP address and the MAC address of the transmit-end virtual machine.
S307. The transmit-end VTEP1 returns the DHCP packet response message to the virtual machine 1, to notify the virtual machine 1 of the newly assigned IP address.

According to this embodiment of the present invention, a transmit-end VTEP1 can intercept a DHCP broadcast packet request that does not have a destination address and that is sent by a transmit-end virtual machine, acquire an IP address of a receive-end VTEP that belongs to a same VxLAN network as the transmit-end VTEP1, encapsulate the broadcast packet into a unicast packet according to an IP address of the receive-end VTEP, and send, in a form of the unicast packet, the original packet to a receive-end VTEP that manages a DHCP server. This can avoid using a multicast manner to perform communication between VTEPs on the VxLAN network, so that construction of the VxLAN network no longer depends on a multicast group quantity or capability of a tunnel end point, which extends application of the VxLAN network. Further, in this embodiment, the transmit-end VTEP1 may further intercept a DHCP packet response message, and report, to a VxLAN centralized controller for storage, an IP address and a MAC address of a transmit-end virtual machine that are carried by the packet response message, so that the VxLAN centralized controller stores updated information, which ensures correctness of information and ensures efficient implementation of subsequent communication.

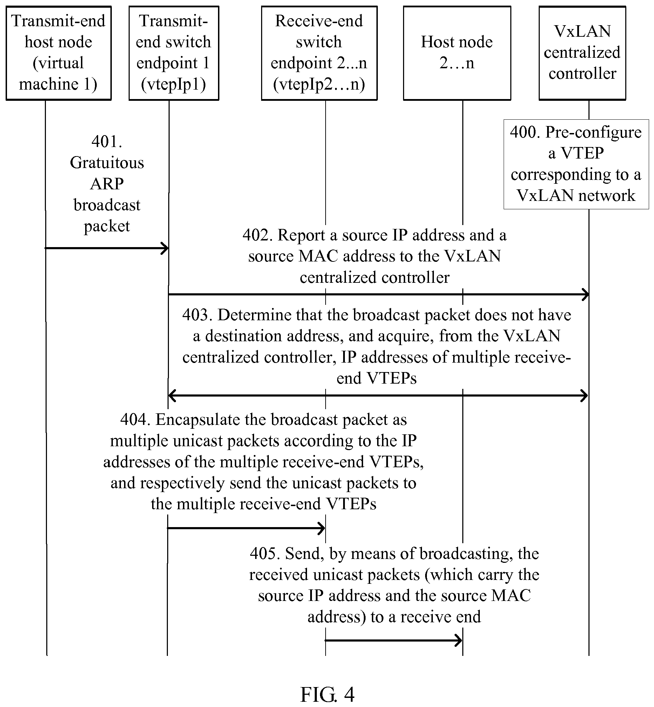

As shown in FIG. 4, the broadcast packet is a gratuitous ARP broadcast packet. After migration occurs on a virtual machine 1, the virtual machine 1 originates a DHCP broadcast packet and acquires a new IP address, and the virtual machine 1 originates a gratuitous ARP packet, where the gratuitous ARP packet carries a MAC address of the virtual machine 1 and a newly assigned IP address, so as to notify another host node of the MAC address of the virtual machine 1 and the newly assigned IP address. A communication method of a virtual extensible local area network provided in an embodiment of the present invention includes the following steps:
S400. Pre-configure a VTEP corresponding to a VxLAN network for the VxLAN network in a VxLAN centralized controller.
   Specifically, a correspondence between an VNI of the VxLAN network and an IP address of a VTEP configured on the VxLAN network is pre-configured in the VxLAN centralized controller. S401. A transmit-end virtual machine 1 originates a gratuitous ARP broadcast packet, and a transmit-end VTEP1 intercepts the gratuitous ARP broadcast packet, where the gratuitous ARP broadcast packet includes a source IP address and a source MAC address but does not include a destination IP address.
   Specifically, after the transmit-end virtual machine 1 sends a broadcast packet that does not have a destination address, a VTEP1 on a subnet on which the transmit-end virtual machine 1 is located no longer uses, after receiving the broadcast packet, a multicast manner to send the broadcast packet, which is referred to as "intercepting a broadcast packet" in this embodiment of the present invention.
S402. The transmit-end VTEP1 determines that the gratuitous ARP broadcast packet includes a source address but does not include a destination address, and reports the source IP address and the source MAC address to the VxLAN centralized controller.
   Specifically, the transmit-end VTEP1 reports the source IP address and the source MAC address to the VxLAN centralized controller, so that the VxLAN centralized controller establishes a correspondence between the source IP address and the source MAC address, and stores the correspondence.
S403. The transmit-end VTEP1 acquires, from the VxLAN centralized controller, IP addresses of multiple VTEPs on a virtual extensible local area network on which the virtual machine 1 is located.
   Specifically, the transmit-end VTEP1 sends a query request to the VxLAN centralized controller, where the query request carries an VNI of the VxLAN network on which the transmit-end virtual machine 1 is located; and the VxLAN centralized controller queries, according to the VNI, the pre-configured correspondence, and acquires an IP address list, stored in the correspondence, of a VTEP that has been configured on the VxLAN network. In this embodiment, the VxLAN centralized controller may return, to the transmit-end VTEP1, an IP address list of all VTEPs that is configured in the correspondence.
S404. The transmit-end VTEP1 encapsulates the gratuitous ARP broadcast packet into a unicast packet, and sends the unicast packet to each receive-end VTEP of the multiple receive-end VTEPs.
   Specifically, the VTEP1 encapsulates content of the gratuitous ARP broadcast packet and the IP address of each receive-end VTEP into one unicast packet, where each unicast packet is corresponding to one receive-end VTEP, and sends, to each receive-end VTEP, a unicast packet corresponding to the address of the receive-end VTEP; after receiving the unicast packet, each receive-end VTEP broadcasts the unicast packet to each host node on a subnet on which the receive-end VTEP is located.
S405. Each receive-end VTEP sends, by means of broadcasting, the unicast packet to a virtual machine managed by the receive-end VTEP, to notify the virtual machine managed by the receive-end VTEP of a new IP address and a MAC address of the virtual machine 1.

According to this embodiment of the present invention, a transmit-end VTEP1 can intercept a gratuitous ARP broadcast packet that does not have a destination address and that is sent by a virtual machine, acquire IP addresses of all VTEPs that belong to a same VxLAN network as a transmit-end VTEP1, encapsulate the broadcast packet into a unicast packet according to the IP addresses of the VTEPs, and send, in a form of the unicast packet, the original packet to all the VTEPs. This can avoid using a multicast manner to perform communication between VTEPs on the VxLAN network, so that construction of the VxLAN network no longer depends on a multicast group quantity or capability of a tunnel end point, which extends application of the VxLAN network. Further, in this embodiment, the transmit-end VTEP1 may further report, to a VxLAN centralized controller, an IP address and a MAC address of a virtual machine 1 that are carried by the gratuitous ARP broadcast packet, so that the VxLAN centralized controller can acquire a newest correspondence between an IP address and a MAC address of a virtual machine and store the correspondence, which ensures correctness of information in the VxLAN centralized controller, avoids impact on a subsequent procedure, and ensures communication efficiency.

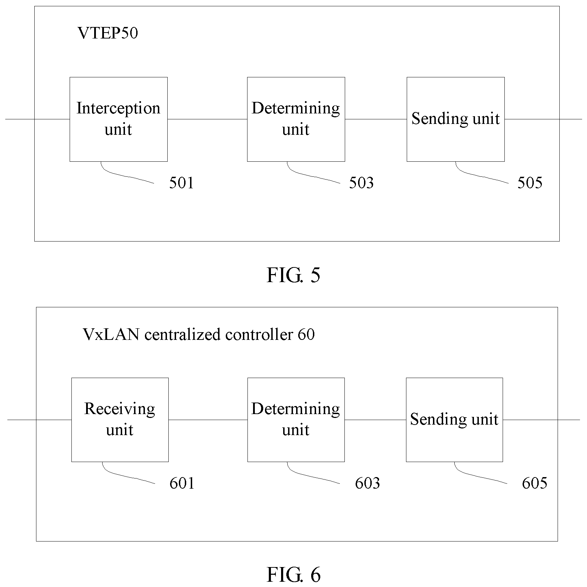

As shown in FIG. 5, an embodiment of the present invention provides a VTEP 50 of a virtual extensible local area network, where the virtual extensible local area network VxLAN includes a VxLAN centralized controller and multiple tunnel end points VTEPs, and the VTEP 50 includes:
an interception unit 501, configured to intercept a broadcast packet sent by a transmit-end virtual machine;
a determining unit 503, configured to determine whether the broadcast packet does not have a destination address, and if determining that the broadcast packet does not have a destination address, acquire, from the VxLAN centralized controller, an IP address of a receive-end VTEP on the VxLAN; and
a sending unit 505, configured to encapsulate the broadcast packet into a unicast packet according to the IP address of the receive-end VTEP, and send the unicast packet to the receive-end VTEP, so that the receive-end VTEP broadcasts the received unicast packet to a receive end.

When the broadcast packet is a gratuitous Address Resolution Protocol ARP broadcast packet, the sending unit 505 is further configured to report, to the VxLAN centralized controller, a source IP address and a source Media Access Control MAC address that are carried by the gratuitous ARP broadcast packet.

When the broadcast packet is a Dynamic Host Configuration Protocol DHCP broadcast packet, the interception unit 501 is further configured to intercept a response packet sent by a DHCP server in response to the unicast packet, where the response packet carries an IP address assigned by the DHCP server to the transmit-end virtual machine and a MAC address; and the sending unit 505 is further configured to report, to the VxLAN centralized controller, the IP address newly assigned to the transmit-end virtual machine and the MAC address that are acquired by the interception unit501.

As shown in FIG. 6, an embodiment of the present invention provides a VxLAN centralized controller of a virtual extensible local area network, where the virtual extensible local area network VxLAN includes a VxLAN centralized controller and multiple tunnel end points VTEPs, and the VxLAN centralized controller 60 includes:
a receiving unit 601, configured to receive a query request sent by a transmit-end VTEP, where the query request is sent to the VxLAN centralized controller after the transmit-end VTEP intercepts a broadcast packet sent by a transmit-end virtual machine and determines that the broadcast packet does not have a destination address, and the query request carries an identifier of the VxLAN on which the transmit-end VTEP is located;
a determining unit 603, configured to determine an IP address of a receive-end VTEP on the VxLAN according to the identifier of the VxLAN; and
a sending unit 605, configured to send a query response to the transmit-end VTEP, where the query response carries the IP address of the receive-end VTEP, so that the transmit-end VTEP encapsulates the broadcast packet into a unicast packet according to the IP address of the receive-end VTEP, and sends the unicast packet to the receive-end VTEP.

The VxLAN centralized controller 60 further includes: a configuration unit 607, configured to pre-configure a correspondence between the identifier of the VxLAN network and IP addresses of all VTEPs on the VxLAN network; and
the determining unit 603 is specifically configured to query the correspondence according to the identifier of the VxLAN on which the transmit-end virtual machine is located, and determine the IP addresses of all the VTEPs on the VxLAN; and the sending unit 605 is specifically configured to send a query response to the transmit-end VTEP, where the query response carries the IP addresses of all the VTEPs.

Preferably, the determining unit 603 is further configured to determine a type of the broadcast packet, and obtain, by means of screening according to the type of the broadcast packet or location information of the transmit-end VTEP, multiple receive-end VTEPs from all the VTEPs on the VxLAN.

Further, the broadcast packet is a gratuitous Address Resolution Protocol ARP broadcast packet, and the receiving unit 601 is further configured to receive and store a source IP address and a source Media Access Control MAC address that are carried by the gratuitous ARP broadcast packet and that are reported by the transmit-end VTEP; or
the broadcast packet is a Dynamic Host Configuration Protocol DHCP broadcast packet, and the receiving unit 601 is further configured to receive and store an IP address assigned by a DHCP server to the transmit-end virtual machine and a Media Access Control MAC address that are reported by the transmit-end VTEP.

With reference to FIG. 1, an embodiment of the present invention provides a communications system of a virtual extensible local area network, where the virtual extensible local area network VxLAN includes a VxLAN centralized controller and multiple tunnel end points VTEPs, and each VTEP and at least one virtual machine managed by the VTEP form a subnet of the VxLAN; where
a transmit-end VTEP is configured to intercept a broadcast packet sent by a transmit-end virtual machine, determine whether the broadcast packet does not have a destination address, and if determining that the broadcast packet does not have a destination address, acquire, from the VxLAN centralized controller, an IP address of a receive-end VTEP on the VxLAN, encapsulate the broadcast packet into a unicast packet according to the IP address of the receive-end VTEP, and send the unicast packet to the receive-end VTEP;
the VxLAN centralized controller is configured to receive a query request sent by the transmit-end VTEP, determine the IP address of the receive-end VTEP on the VxLAN, and send a query response to the transmit-end VTEP, where the query response carries the IP address of the receive-end VTEP; and
the receive-end VTEP is configured to receive the unicast packet sent by the transmit-end VTEP, and broadcast the received unicast packet to a receive end.

Further, the VxLAN centralized controller is further configured to pre-configure a correspondence between an identifier of the VxLAN network and IP addresses of all VTEPs on the VxLAN network; and
the VxLAN centralized controller is specifically configured to query the correspondence according to the identifier of the VxLAN on which the transmit-end virtual machine is located, determine the IP addresses of all the VTEPs on the VxLAN, and send a query response to the transmit-end VTEP, where the query response carries the IP addresses of all the VTEPs.

Further, the VxLAN centralized controller is further configured to determine a type of the broadcast packet, and obtain, by means of screening according to the type of the broadcast packet or location information of the transmit-end VTEP, multiple receive-end VTEPs from all the VTEPs on the VxLAN.

Preferably, the broadcast packet is a gratuitous Address Resolution Protocol ARP broadcast packet; the transmit-end VTEP is further configured to report, to the VxLAN centralized controller, a source IP address and a source Media Access Control MAC address that are carried by the gratuitous ARP broadcast packet; and the VxLAN centralized controller is configured to receive and store the source IP address and the source MAC address.

Preferably, the broadcast packet is a Dynamic Host Configuration Protocol DHCP broadcast packet; the transmit-end VTEP is further configured to intercept a response packet sent by a DHCP server in response to the unicast packet, where the response packet carries an IP address assigned by the DHCP server to the transmit-end virtual machine and a MAC address, and report, to the VxLAN centralized controller, the IP address newly assigned to the transmit-end virtual machine and the MAC address; and the VxLAN centralized controller is further configured to receive and store the IP address newly assigned to the transmit-end virtual machine and the MAC address.

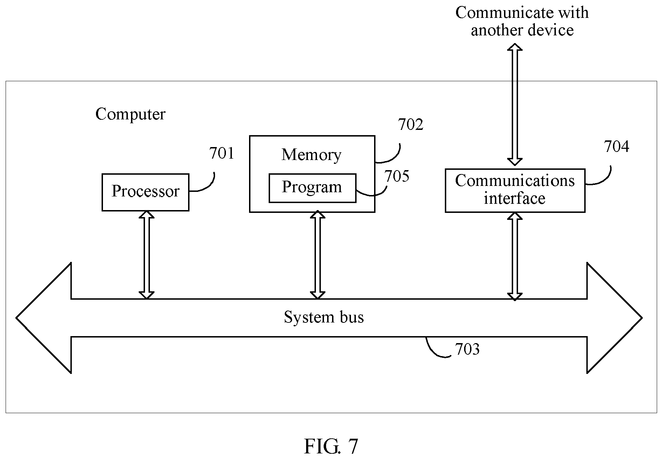

As shown in FIG. 7, FIG. 7 is a structural diagram of composition of a computer according to an embodiment of the present invention. The computer in this embodiment of the present invention may include:
a processor 701, a memory 702, a system bus 703, and a communications interface 704. The processor 701, the memory 702, and the communications interface 704 are connected and implement communication with each other by using the system bus 703.

The processor 701 may be a single-core or multi-core central processing unit, or an application-specific integrated circuit, or one or more integrated circuits that are configured to implement the embodiment of the present invention.

The memory 702 may be a high-speed RAM memory, or may be a non-volatile memory (non-volatile memory), such as at least one magnetic disk memory.

The memory 702 is configured to store a computer executable instruction 705. Specifically, the computer executable instruction 705 may include program code.

When the computer runs, the processor 701 runs the computer executable instruction 705, which may execute the method provided in any embodiment of the embodiments of the present invention.

Persons of ordinary skill in the art may understand that, each aspect of the present invention or a possible implementation manner of each aspect may be specifically implemented as a system, a method, or a computer program product. Therefore, each aspect of the present invention or a possible implementation manner of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation manner of each aspect may take a form of a computer program product, where the computer program product refers to computer readable program code stored in a computer readable medium.

The computer readable medium may be a computer readable signal medium or a computer readable storage medium. The computer readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer readable program code stored in a computer readable medium, so that the processor can perform a function and an action specified in each step or a combination of steps in a flowchart; an apparatus is generated to implement a function and an action specified in each block or a combination of blocks in a block diagram.

All computer readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may in practice be executed substantially at the same time, or these blocks may sometimes be executed in reverse order.

## Claims

1. A communication method of a virtual extensible local area network, wherein the virtual extensible local area network VxLAN comprises a VxLAN centralized controller and multiple tunnel end points VTEPs, and the method comprises:
intercepting (S201), by a transmit-end VTEP, a broadcast packet sent by a transmit-end virtual machine;
determining (S202), by the transmit-end VTEP, whether the broadcast packet does not have a destination address, and if determining that the broadcast packet does not have a destination address, acquiring, by the transmit-end VTEP, from the VxLAN centralized controller, an IP address of a receive-end VTEP on the VxLAN; and
encapsulating (S203), by the transmit-end VTEP, the broadcast packet into a unicast packet according to the IP address of the receive-end VTEP, and sending the unicast packet to the receive-end VTEP, so that the receive-end VTEP broadcasts the received unicast packet to a receive end.

2. The method according to claim 1, wherein the acquiring, by the transmit-end VTEP, from the VxLAN centralized controller, an IP address of a receive-end VTEP on the VxLAN comprises:
sending, by the transmit-end VTEP, a query request to the VxLAN centralized controller; and
receiving, by the transmit-end VTEP, a query response returned by the VxLAN centralized controller, wherein the query response carries IP addresses of all VTEPs on the VxLAN.

3. The method according to claim 1, wherein the acquiring, by the transmit-end VTEP, from the VxLAN centralized controller, an IP address of a receive-end VTEP on the VxLAN comprises:
sending, by the transmit-end VTEP, a query request to the VxLAN centralized controller; and
receiving, by the transmit-end VTEP, a query response returned by the VxLAN centralized controller, wherein the query response carries IP addresses of multiple receive-end VTEPs on the VxLAN, and the multiple receive-end VTEPs are obtained by the VxLAN centralized controller from all VTEPs on the VxLAN by means of screening according to a type of the broadcast packet or location information of the transmit-end VTEP.

4. The method according to any one of claims 1 to 3, wherein the broadcast packet is a gratuitous Address Resolution Protocol ARP broadcast packet, and the method further comprises:
reporting, by the transmit-end VTEP, to the VxLAN centralized controller, a source IP address and a source Media Access Control MAC address that are carried by the gratuitous ARP broadcast packet.

5. The method according to any one of claims 1 to 3, wherein the broadcast packet is a Dynamic Host Configuration Protocol DHCP broadcast packet, and the method further comprises:
intercepting, by the transmit-end VTEP, a response packet sent by a DHCP server in response to the unicast packet, wherein the response packet carries an IP address assigned by the DHCP server to the transmit-end virtual machine and a MAC address, and reporting, by the transmit-end VTEP, to the VxLAN centralized controller, the IP address newly assigned to the transmit-end virtual machine and the MAC address.

6. A communication method of a virtual extensible local area network, wherein the virtual extensible local area network VxLAN comprises a VxLAN centralized controller and multiple tunnel end points VTEPs, and the method comprises:
receiving, by the VxLAN centralized controller, a query request sent by a transmit-end VTEP, wherein the query request is sent to the VxLAN centralized controller after the transmit-end VTEP intercepts a broadcast packet sent by a transmit-end virtual machine and determines that the broadcast packet does not have a destination address, and the query request carries an identifier of the VxLAN on which the transmit-end VTEP is located;
determining, by the VxLAN centralized controller, an IP address of a receive-end VTEP on the VxLAN according to the identifier of the VxLAN; and
sending, by the VxLAN centralized controller, a query response to the transmit-end VTEP, wherein the query response carries the IP address of the receive-end VTEP, so that the transmit-end VTEP encapsulates the broadcast packet into a unicast packet according to the IP address of the receive-end VTEP, and sends the unicast packet to the receive-end VTEP.

7. The method according to claim 6, further comprising:
pre-configuring, by the VxLAN centralized controller, a correspondence between the identifier of the VxLAN network and IP addresses of all VTEPs on the VxLAN network; and
accordingly, querying, by the VxLAN centralized controller, the correspondence according to the identifier of the VxLAN, determining the IP addresses of all the VTEPs on the VxLAN, and sending a query response to the transmit-end VTEP, wherein the query response carries the IP addresses of all the VTEPs.

8. The method according to claim 7, after the determining the IP addresses of all the VTEPs on the VxLAN, further comprising:
determining, by the VxLAN centralized controller, a type of the broadcast packet, and obtaining, by means of screening according to the type of the broadcast packet or location information of the transmit-end VTEP, multiple receive-end VTEPs from all the VTEPs on the VxLAN.

9. The method according to any one of claims 6 to 8, wherein the broadcast packet is a gratuitous Address Resolution Protocol ARP broadcast packet, and the method further comprises:
receiving, by the VxLAN centralized controller, a source IP address and a source Media Access Control MAC address that are carried by the gratuitous ARP broadcast packet and that are reported by the transmit-end VTEP; and
storing, by the VxLAN centralized controller, the source IP address and the source MAC address.

10. The method according to any one of claims 6 to 8, wherein the broadcast packet is a Dynamic Host Configuration Protocol DHCP broadcast packet, and the method further comprises:
receiving, by the VxLAN centralized controller, an IP address assigned by a DHCP server to the transmit-end virtual machine and a Media Access Control MAC address that are reported by the transmit-end VTEP; and
storing, by the VxLAN centralized controller, the IP address newly assigned to the transmit-end virtual machine and the MAC address.

11. A communications system of a virtual extensible local area network, wherein the virtual extensible local area network VxLAN comprises a VxLAN centralized controller and multiple tunnel end points VTEPs, and each VTEP and at least one virtual machine managed by the VTEP form a subnet of the VxLAN; wherein
a transmit-end VTEP is configured to intercept a broadcast packet sent by a transmit-end virtual machine, determine whether the broadcast packet does not have a destination address, and if determining that the broadcast packet does not have a destination address, acquire, from the VxLAN centralized controller, an IP address of a receive-end VTEP on the VxLAN, encapsulate the broadcast packet into a unicast packet according to the IP address of the receive-end VTEP, and send the unicast packet to the receive-end VTEP;
the VxLAN centralized controller is configured to receive a query request sent by the transmit-end VTEP, determine the IP address of the receive-end VTEP on the VxLAN, and send a query response to the transmit-end VTEP, wherein the query response carries the IP address of the receive-end VTEP; and
the receive-end VTEP is configured to receive the unicast packet sent by the transmit-end VTEP, and broadcast the received unicast packet to a receive end.

12. The system according to claim 11, wherein the VxLAN centralized controller is further configured to pre-configure a correspondence between an identifier of the VxLAN network and IP addresses of all VTEPs on the VxLAN network; and
the VxLAN centralized controller is specifically configured to query the correspondence according to the identifier of the VxLAN on which the transmit-end virtual machine is located, determine the IP addresses of all the VTEPs on the VxLAN, and send a query response to the transmit-end VTEP, wherein the query response carries the IP addresses of all the VTEPs.

13. The system according to claim 12, wherein the VxLAN centralized controller is further configured to determine a type of the broadcast packet, and obtain, by means of screening according to the type of the broadcast packet or location information of the transmit-end VTEP, multiple receive-end VTEPs from all the VTEPs on the VxLAN.

14. The system according to any one of claims 11 to 13, wherein the broadcast packet is a gratuitous Address Resolution Protocol ARP broadcast packet;
the transmit-end VTEP is further configured to report, to the VxLAN centralized controller, a source IP address and a source Media Access Control MAC address that are carried by the gratuitous ARP broadcast packet; and
the VxLAN centralized controller is configured to receive and store the source IP address and the source MAC address.

15. The system according to any one of claims 11 to 13, wherein the broadcast packet is a Dynamic Host Configuration Protocol DHCP broadcast packet;
the transmit-end VTEP is further configured to intercept a response packet sent by a DHCP server in response to the unicast packet, wherein the response packet carries an IP address assigned by the DHCP server to the transmit-end virtual machine and a MAC address, and report, to the VxLAN centralized controller, the IP address newly assigned to the transmit-end virtual machine and the MAC address; and
the VxLAN centralized controller is further configured to receive and store the IP address newly assigned to the transmit-end virtual machine and the MAC address.

16. A communications apparatus of a virtual extensible local area network, wherein the virtual extensible local area network VxLAN comprises a VxLAN centralized controller and multiple tunnel end points VTEPs, and the VTEP (50) comprises:
an interception unit (501), configured to intercept a broadcast packet sent by a transmit-end virtual machine;
a determining unit (503), configured to determine whether the broadcast packet does not have a destination address, and if determining that the broadcast packet does not have a destination address, acquire, from the VxLAN centralized controller, an IP address of a receive-end VTEP on the VxLAN; and
a sending unit (505), configured to encapsulate the broadcast packet into a unicast packet according to the IP address of the receive-end VTEP, and send the unicast packet to the receive-end VTEP, so that the receive-end VTEP broadcasts the received unicast packet to a receive end.

17. The communications apparatus according to claim 16, wherein the broadcast packet is a gratuitous Address Resolution Protocol ARP broadcast packet; and
the sending unit (505) is further configured to report, to the VxLAN centralized controller, a source IP address and a source Media Access Control MAC address that are carried by the gratuitous ARP broadcast packet.

18. The communications apparatus according to claim 17, wherein the broadcast packet is a Dynamic Host Configuration Protocol DHCP broadcast packet;
the interception unit (501) is further configured to intercept a response packet sent by a DHCP server in response to the unicast packet, wherein the response packet carries an IP address assigned by the DHCP server to the transmit-end virtual machine and a MAC address; and
the sending unit (505) is further configured to report, to the VxLAN centralized controller, the IP address newly assigned to the transmit-end virtual machine and the MAC address that are acquired by the interception unit (501).

19. A communications apparatus of a virtual extensible local area network, wherein the virtual extensible local area network VxLAN comprises a VxLAN centralized controller (60) and multiple tunnel end points VTEPs, and the VxLAN centralized controller (60) comprises:
a receiving unit (601), configured to receive a query request sent by a transmit-end VTEP, wherein the query request is sent to the VxLAN centralized controller (60) after the transmit-end VTEP intercepts a broadcast packet sent by a transmit-end virtual machine and determines that the broadcast packet does not have a destination address, and the query request carries an identifier of the VxLAN on which the transmit-end VTEP is located;
a determining unit (603), configured to determine an IP address of a receive-end VTEP on the VxLAN according to the identifier of the VxLAN; and
a sending unit (605), configured to send a query response to the transmit-end VTEP, wherein the query response carries the IP address of the receive-end VTEP, so that the transmit-end VTEP encapsulates the broadcast packet into a unicast packet according to the IP address of the receive-end VTEP, and sends the unicast packet to the receive-end VTEP.

20. The communications apparatus according to claim 19, wherein the VxLAN centralized controller (60) further comprises a configuration unit, configured to pre-configure a correspondence between the identifier of the VxLAN network and IP addresses of all VTEPs on the VxLAN network;
the determining unit (603) is specifically configured to query the correspondence according to the identifier of the VxLAN on which the transmit-end virtual machine is located, and determine the IP addresses of all the VTEPs on the VxLAN; and
the sending unit (605) is specifically configured to send a query response to the transmit-end VTEP, wherein the query response carries the IP addresses of all the VTEPs.

21. The communications apparatus according to claim 20, wherein the determining unit (603) is further configured to determine a type of the broadcast packet, and obtain, by means of screening according to the type of the broadcast packet or location information of the transmit-end VTEP, multiple receive-end VTEPs from all the VTEPs on the VxLAN.

22. The communications apparatus according to any one of claims 19 to 21, wherein the broadcast packet is a gratuitous Address Resolution Protocol ARP broadcast packet, and the receiving unit (601) is further configured to receive and store a source IP address and a source Media Access Control MAC address that are carried by the gratuitous ARP broadcast packet and that are reported by the transmit-end VTEP; or
the broadcast packet is a Dynamic Host Configuration Protocol DHCP broadcast packet, and the receiving unit (601) is further configured to receive and store an IP address assigned by a DHCP server to the transmit-end virtual machine and a Media Access Control MAC address that are reported by the transmit-end VTEP.

## Patentansprüche

1. Verfahren zur Kommunikation eines virtuellen erweiterbaren Local Area Network (virtual extensible local area network), wobei das virtuelle erweiterbare Local Area Network, VxLAN, eine zentral angeordnete VxLAN-Steuereinheit sowie mehrere Tunnelendpunkte, VTEPs, umfasst und das Verfahren Folgendes umfasst:
Auffangen (S201) eines von einer senderseitigen virtuellen Maschine gesendeten Broadcast-Pakets durch einen senderseitigen VTEP;
Bestimmen (S202) durch den senderseitigen VTEP, ob das Broadcast-Paket keine Zieladresse aufweist, und, falls er bestimmt, dass das Broadcast-Paket keine Zieladresse aufweist, Erhalten einer IP-Adresse eines empfängerseitigen VTEP in dem VxLAN von der zentral angeordneten VxLAN-Steuereinheit durch den senderseitigen VTEP; und
Einkapseln (S203) des Broadcast-Pakets in ein Unicast-Paket gemäß der IP-Adresse des empfängerseitigen VTEP durch den senderseitigen VTEP und Senden des Unicast-Pakets an den empfängerseitigen VTEP, so dass der empfangerseitige VTEP das empfangene Unicast-Paket an eine Empfängerseite überträgt.

2. Verfahren nach Anspruch 1, wobei das Erhalten einer IP-Adresse eines empfängerseitigen VTEP in dem VxLAN von der zentral angeordneten VxLAN-Steuereinheit durch den senderseitigen VTEP Folgendes umfasst:
Senden einer Abfrageaufforderung an die zentral angeordnete VxLAN-Steuereinheit durch den senderseitigen VTEP; und
Empfangen einer von der zentral angeordneten VxLAN-Steuereinheit zurückgesendeten Abfrageantwort durch den senderseitigen VTEP, wobei die Abfrageantwort IP-Adressen aller VTEPs im VxLAN trägt.

3. Verfahren nach Anspruch 1, wobei das Erhalten einer IP-Adresse eines empfängerseitigen VTEP im VxLAN von der zentral angeordneten VxLAN-Steuereinheit durch den senderseitigen VTEP Folgendes umfasst:
Senden einer Abfrageaufforderung an die zentral angeordnete VxLAN-Steuereinheit durch den senderseitigen VTEP; und
Empfangen einer von der zentral angeordneten VxLAN-Steuereinheit zurückgesendeten Abfrageantwort durch den senderseitigen VTEP, wobei die Abfrageantwort IP-Adressen mehrerer empfängerseitiger VTEPs im VxLAN trägt und die mehreren empfängerseitigen VTEPs durch die zentral angeordnete VxLAN-Steuereinheit von allen VTEPs im VxLAN mittels Durchsuchens gemäß einem Broadcast-Paket-Typ oder Standortinformationen des senderseitigen VTEP erhalten werden.

4. Verfahren nach einem der Ansprüche 1 bis 3, wobei es sich bei dem Broadcast-Paket um ein unaufgefordertes ARP(gratuitous Address Resolution Protocol)-Broadcast-Paket handelt und das Verfahren ferner Folgendes umfasst:
Mitteilen einer Quell-IP-Adresse und einer Quell-MAC(Media Access Control)-Adresse, welche vom unaufgeforderten ARP-Broadcast-Paket getragen werden, an die zentral angeordnete VxLAN-Steuereinheit durch den senderseitigen VTEP.

5. Verfahren nach einem der Ansprüche 1 bis 3, wobei es sich bei dem Broadcast-Paket um ein DHCP(Dynamic Host Configuration Protocol)-Broadcast-Paket handelt und das Verfahren ferner Folgendes umfasst:
Auffangen eines von einem DHCP-Server in Antwort auf ein Unicast-Paket gesendeten Antwort-Pakets durch den senderseitigen VTEP, wobei das Antwort-Paket eine der senderseitigen virtuellen Maschine durch den DHCP-Server zugewiesene IP-Adresse sowie eine MAC-Adresse trägt, und Mitteilen der der senderseitigen virtuellen Maschine neu zugewiesenen IP-Adresse sowie der MAC-Adresse an die zentral angeordnete VxLAN-Steuereinheit durch den senderseitigen VTEP.

6. Verfahren zur Kommunikation eines virtuellen erweiterbaren Local Area Network, wobei das virtuelle erweiterbare Local Area Network, VxLAN, eine zentral angeordnete VxLAN-Steuereinheit sowie mehrere Tunnelendpunkte, VTEPs, umfasst und das Verfahren Folgendes umfasst:
Empfangen einer von einem senderseitigen VTEP gesendeten Abfrageaufforderung durch die zentral angeordnete VxLAN-Steuereinheit, wobei die Abfrageaufforderung an die zentral angeordnete VxLAN-Steuereinheit gesendet wird, nachdem der senderseitige VTEP ein von einer senderseitigen virtuellen Maschine gesendetes Broadcast-Paket auffängt und bestimmt, dass das Broadcast-Paket keine Zieladresse aufweist, und die Abfrageaufforderung einen Identifikator des VxLAN trägt, in welchem sich der senderseitige VTEP befindet;
Bestimmen einer IP-Adresse eines empfängerseitigen VTEP im VxLAN gemäß dem Identifikator des VxLAN durch die zentral angeordnete VxLAN-Steuereinheit; und Senden einer Abfrageantwort an den senderseitigen VTEP durch die zentral angeordnete VxLAN-Steuereinheit, wobei die Abfrageantwort die IP-Adresse des empfängerseitigen VTEP trägt, so dass der senderseitige VTEP das Broadcast-Paket in ein Unicast-Paket gemäß der IP-Adresse des empfängerseitigen VTEP einkapselt und das Unicast-Paket an den empfängerseitigen VTEP sendet.

7. Verfahren nach Anspruch 6, ferner umfassend:
Vorkonfigurieren einer Entsprechung zwischen dem Identifikator des VxLAN-Netzwerkes und IP-Adressen aller VTEPs im VxLAN-Netzwerk durch die zentral angeordnete VxLAN-Steuereinheit; und
entsprechendes Abfragen der Entsprechung gemäß dem Identifikator des VxLAN durch die zentral angeordnete VxLAN-Steuereinheit, Bestimmen der IP-Adressen aller VTEPs im VxLAN und Senden einer Abfrageantwort an den senderseitigen VTEP, wobei die Abfrageantwort die IP-Adressen aller VTEPs trägt.

8. Verfahren nach Anspruch 7, ferner nach dem Bestimmen der IP-Adressen aller VTEPs im VxLAN umfassend:
Bestimmen eines Typs des Broadcast-Pakets durch die zentral angeordnete VxLAN-Steuereinheit und Erhalten mehrerer empfängerseitiger VTEPs von allen VTEPs im VxLAN mittels Durchsuchens gemäß dem Typ des Broadcast-Pakets oder Standortinformationen des senderseitigen VTEP.

9. Verfahren nach einem der Ansprüche 6 bis 8, wobei es sich bei dem Broadcast-Paket um ein unaufgefordertes ARP(gratuitous Address Resolution Protocol)-Broadcast-Paket handelt und das Verfahren ferner Folgendes umfasst:
Erhalten einer Quell-IP-Adresse sowie einer Quell-MAC(Media Access Control)-Adresse, welche vom unaufgeforderten ARP-Broadcast-Paket getragen und vom senderseitigen VTEP mitgeteilt werden, durch die zentral angeordnete VxLAN-Steuereinheit; und
Speichern der Quell-IP-Adresse und der Quell-MAC-Adresse durch die zentral angeordnete VxLAN-Steuereinheit.

10. Verfahren nach einem der Ansprüche 6 bis 8, wobei es sich bei dem Broadcast-Paket um ein DHCP(Dynamic Host Configuration Protocol)-Broadcast-Paket handelt und das Verfahren ferner Folgendes umfasst:
Empfangen einer der senderseitigen virtuellen Maschine durch einen DHCP-Server zugewiesenen IP-Adresse sowie einer MAC(Media Access Control)-Adresse, welche vom senderseitigen VTEP mitgeteilt werden, durch die zentral angeordnete VxLAN-Steuereinheit; und
Speichern der der senderseitigen virtuellen Maschine neu zugewiesenen IP-Adresse sowie der MAC-Adresse durch die zentral angeordnete VxLAN-Steuereinheit.

11. Kommunikationssystem eines virtuellen erweiterbaren Local Area Network, wobei das virtuelle erweiterbare Local Area Network, VxLAN, eine zentral angeordnete VxLAN-Steuereinheit sowie mehrere Tunnelendpunkte, VTEPs, umfasst und jeder VTEP und mindestens eine vom VTEP verwaltete virtuelle Maschine ein Teilnetz des VxLAN bilden; wobei
ein senderseitiger VTEP dafür konfiguriert ist, ein von einer senderseitigen virtuellen Maschine gesendetes Broadcast-Paket aufzufangen, zu bestimmen, ob das Broadcast-Paket keine Zieladresse aufweist, und, falls er bestimmt, dass das Broadcast-Paket keine Zieladresse aufweist, eine IP-Adresse eines empfängerseitigen VTEP in dem VxLAN von der zentral angeordneten VxLAN-Steuereinheit zu erhalten, das Broadcast-Paket in ein Unicast-Paket gemäß der IP-Adresse des empfängerseitigen VTEP einzukapseln und das Unicast-Paket an den empfängerseitigen VTEP zu senden;
die zentral angeordnete VxLAN-Steuereinheit dafür konfiguriert ist, eine vom senderseitigen VTEP gesendete Abfrageaufforderung zu empfangen, die IP-Adresse des empfängerseitigen VTEP im VxLAN zu bestimmen und eine Abfrageantwort an den senderseitigen VTEP zu senden, wobei die Abfrageantwort die IP-Adresse des empfängerseitigen VTEP trägt; und
der empfängerseitige VTEP dafür konfiguriert ist, das vom senderseitigen VTEP gesendete Unicast-Paket zu empfangen und das empfangene Unicast-Paket an eine Empfängerseite zu übertragen.

12. System nach Anspruch 11, wobei die zentral angeordnete VxLAN-Steuereinheit ferner dafür konfiguriert ist, eine Entsprechung zwischen einem Identifikator des VxLAN-Netzwerkes und IP-Adressen aller VTEPs im VxLAN-Netzwerk vorzukonfigurieren; und
die zentral angeordnete VxLAN-Steuereinheit speziell dafür konfiguriert ist, die Entsprechung gemäß dem Identifikator des VxLAN abzufragen, in welchem sich die senderseitige virtuelle Maschine befindet, die IP-Adressen aller VTEPs im VxLAN zu bestimmen und eine Abfrageantwort an den senderseitigen VTEP zu senden, wobei die Abfrageantwort die IP-Adressen aller VTEPs trägt.

13. System nach Anspruch 12, wobei die zentral angeordnete VxLAN-Steuereinheit ferner dafür konfiguriert ist, einen Typ des Broadcast-Pakets zu bestimmen und mittels Durchsuchens gemäß dem Typ des Broadcast-Pakets oder Standortinformationen des senderseitigen VTEP mehrere empfängerseitige VTEPs von allen VTEPs im VxLAN zu erhalten.

14. System nach einem der Ansprüche 11 bis 13, wobei es sich bei dem Broadcast-Paket um ein unaufgefordertes ARP(gratuitous Address Resolution Protocol)-Broadcast-Paket handelt;
der senderseitige VTEP ferner dafür konfiguriert ist, eine Quell-IP-Adresse sowie eine Quell-MAC(Media Access Control)-Adresse, welche vom unaufgeforderten ARP-Broadcast-Paket getragen werden, an die zentral angeordnete VxLAN-Steuereinheit mitzuteilen; und
die zentral angeordnete VxLAN-Steuereinheit dafür konfiguriert ist, die Quell-IP-Adresse sowie die Quell-MAC-Adresse zu empfangen und zu speichern.

15. System nach einem der Ansprüche 11 bis 13, wobei es sich bei dem Broadcast-Paket um ein DHCP(Dynamic Host Configuration Protocol)-Broadcast-Paket handelt;
der senderseitige VTEP ferner dafür konfiguriert ist, ein von einem DHCP-Server in Antwort auf das Unicast-Paket gesendetes Antwort-Paket aufzufangen, wobei das Antwort-Paket eine der senderseitigen virtuellen Maschine vom DHCP-Server zugewiesene IP-Adresse sowie eine MAC-Adresse trägt, und die der senderseitigen virtuellen Maschine neu zugewiesene IP-Adresse sowie die MAC-Adresse an die zentral angeordnete VxLAN-Steuereinheit mitzuteilen; und
die zentral angeordnete VxLAN-Steuereinheit ferner dafür konfiguriert ist, die der senderseitigen virtuellen Maschine neu zugewiesene IP-Adresse sowie die MAC-Adresse zu empfangen und zu speichern.

16. Kommunikationsvorrichtung eines virtuellen erweiterbaren Local Area Network, wobei das virtuelle erweiterbare Local Area Network, VxLAN, eine zentral angeordnete VxLAN-Steuereinheit sowie mehrere Tunnelendpunkte, VTEPs, umfasst und der VTEP (50) Folgendes umfasst:
eine Auffangeinheit (501), welche dafür konfiguriert ist, ein von einer senderseitigen virtuellen Maschine gesendetes Broadcast-Paket aufzufangen;
eine Bestimmungseinheit (503), welche dafür konfiguriert ist, zu bestimmen, ob das Broadcast-Paket keine Zieladresse aufweist, und, falls sie bestimmt, dass das Broadcast-Paket keine Zieladresse aufweist, eine IP-Adresse eines empfängerseitigen VTEP im VxLAN von der zentral angeordneten VxLAN-Steuereinheit zu erlangen; und
eine Sendeeinheit (505), welche dafür konfiguriert ist, das Broadcast-Paket in ein Unicast-Paket gemäß der IP-Adresse des empfängerseitigen VTEP einzukapseln und das Unicast-Paket an den empfängerseitigen VTEP zu senden, so dass der empfängerseitige VTEP das erhaltene Unicast-Paket an eine Empfängerseite überträgt.

17. Kommunikationsvorrichtung nach Anspruch 16, wobei es sich bei dem Broadcast-Paket um ein unaufgefordertes ARP(Address Resolution Protocol)-Broadcast-Paket handelt; und
die Sendeeinheit (505) ferner dafür konfiguriert ist, eine Quell-IP-Adresse sowie eine Quell-MAC(Media Access Control)-Adresse, welche vom unaufgeforderten ARP-Broadcast-Paket getragen werden, an die zentral angeordnete VxLAN-Steuereinheit mitzuteilen.

18. Kommunikationsvorrichtung nach Anspruch 17, wobei es sich bei dem Broadcast-Paket um ein DHCP(Dynamic Host Configuration Protocol)-Broadcast-Paket handelt;
die Auffangeinheit (501) ferner dafür konfiguriert ist, ein von einem DHCP-Server in Antwort auf das Unicast-Paket gesendetes Antwort-Paket aufzufangen, wobei das Antwort-Paket eine der senderseitigen virtuellen Maschine durch den DHCP-Server zugewiesene IP-Adresse sowie eine MAC-Adresse trägt; und
die Sendeeinheit (505) ferner dafür konfiguriert ist, die der senderseitigen virtuellen Maschine neu zugewiesene IP-Adresse sowie die MAC-Adresse, welche von der Auffangeinheit (501) erhalten werden, an die zentral angeordnete VxLAN-Steuereinheit mitzuteilen.

19. Kommunikationsvorrichtung eines virtuellen erweiterbaren Local Area Network, wobei das virtuelle erweiterbare Local Area Network, VxLAN, eine zentral angeordnete VxLAN Steuereinheit (60) sowie mehrere Tunnelendpunkte, VTEPs, umfasst und die zentral angeordnete VxLAN-Steuereinheit (60) Folgendes umfasst:
eine Empfangseinheit (601), welche dafür konfiguriert ist, eine von einem senderseitigen VTEP gesendete Abfrageaufforderung zu empfangen, wobei die Abfrageaufforderung an die zentral angeordnete VxLAN-Steuereinheit (60) gesendet wird, nachdem der senderseitige VTEP ein von einer senderseitigen virtuellen Maschine gesendetes Broadcast-Paket auffängt und bestimmt, dass das Broadcast-Paket keine Zieladresse aufweist, und die Abfrageaufforderung einen Identifikator des VxLAN trägt, in welchem sich der senderseitige VTEP befindet;
eine Bestimmungseinheit (603), welche dafür konfiguriert ist, eine IP-Adresse eines empfängerseitigen VTEP im VxLAN gemäß dem Identifikator des VxLAN zu bestimmen; und
eine Sendeeinheit (605), welche dafür konfiguriert ist, eine Abfrageantwort an den senderseitigen VTEP zu senden, wobei die Abfrageantwort die IP-Adresse des empfängerseitigen VTEP trägt, so dass der senderseitige VTEP das Broadcast-Paket in ein Unicast-Paket gemäß der IP-Adresse des empfängerseitigen VTEP einkapselt und das Unicast-Paket an den empfängerseitigen VTEP sendet.

20. Kommunikationsvorrichtung nach Anspruch 19, wobei die zentral angeordnete VxLAN-Steuereinheit (60) ferner eine Konfigurationseinheit umfasst, welche dafür konfiguriert ist, eine Entsprechung zwischen dem Identifikator des VxLAN-Netzwerkes und IP-Adressen aller VTEPs im VxLAN-Netzwerk vorzukonfigurieren; die Bestimmungseinheit (603) speziell dafür konfiguriert ist, die Entsprechung gemäß dem Identifikator des VxLAN abzufragen, in welchem sich die senderseitige virtuelle Maschine befindet, und die IP-Adressen aller VTEPs im VxLAN zu bestimmen; und
die Sendeeinheit (605) speziell dafür konfiguriert ist, eine Abfrageantwort an den senderseitigen VTEP zu senden, wobei die Abfrageantwort die IP-Adressen aller VTEPs trägt.

21. Kommunikationsvorrichtung nach Anspruch 20, wobei die Bestimmungseinheit (603) ferner dafür konfiguriert ist, einen Typ des Broadcast-Pakets zu bestimmen und mittels Durchsuchens gemäß dem Typ des Broadcast-Pakets oder Standortinformationen des senderseitigen VTEP mehrere empfängerseitige VTEPs von allen VTEPs im VxLAN zu erhalten.

22. Kommunikationsvorrichtung nach einem der Ansprüche 19 bis 21, wobei es sich bei dem Broadcast-Paket um ein unaufgefordertes ARP(gratuitous Address Resolution Protocol)-Broadcast-Paket handelt und die Empfangseinheit (601) ferner dafür konfiguriert ist, eine Quell-IP-Adresse sowie eine Quell-MAC(Media Access Control)-Adresse zu empfangen und zu speichern, welche vom unaufgeforderten ARP-Broadcast-Paket getragen und vom senderseitigen VTEP mitgeteilt werden; oder
es sich bei dem Broadcast-Paket um ein DHCP(Dynamic Host Configuration Protocol)-Broadcast-Paket handelt und die Empfangseinheit (601) ferner dafür konfiguriert ist, eine der senderseitigen virtuellen Maschine durch einen DHCP-Server zugewiesene IP-Adresse sowie eine MAC(Media Access Control)-Adresse, welche vom senderseitigen VTEP mitgeteilt werden, zu empfangen und zu speichern.

## Revendications

1. Procédé de communication d'un réseau local extensible virtuel, dans lequel le réseau local extensible virtuel VxLAN comprend une unité de commande centralisée VxLAN et de multiples points d'extrémité de tunnel VTEP, et le procédé comprend les étapes consistant à :
intercepter (S201), par un VTEP d'extrémité de transmission, un paquet de diffusion envoyé par une machine virtuelle d'extrémité de transmission ;
déterminer (S202), par le VTEP d'extrémité de transmission, si le paquet de diffusion n'a pas d'adresse de destination, et si on détermine que le paquet de diffusion n'a pas d'adresse de destination, acquérir, par le VTEP d'extrémité de transmission, à partir de l'unité de commande centralisée VxLAN, une adresse IP d'un VTEP d'extrémité de réception sur le VxLAN ; et
encapsuler (S203), par le VTEP d'extrémité de transmission, le paquet de diffusion dans un paquet d'unidiffusion en fonction de l'adresse IP du VTEP d'extrémité de réception, et envoyer le paquet d'unidiffusion au VTEP d'extrémité de réception, de sorte que le VTEP d'extrémité de réception diffuse le paquet d'unidiffusion reçu à une extrémité de réception.

2. Procédé selon la revendication 1, dans lequel l'acquisition, par le VTEP d'extrémité de transmission, depuis l'unité de commande centralisée VxLAN, d'une adresse IP d'un VTEP d'extrémité de réception sur le VxLAN comprend les étapes consistant à :
envoyer, par le VTEP d'extrémité de transmission, une demande de requête à l'unité de commande centralisée VxLAN ; et
recevoir, par le VTEP d'extrémité de transmission, une réponse à la requête retournée par l'unité de commande centralisée VxLAN, dans lequel la réponse à la requête achemine des adresses IP de tous les VTEP sur le VxLAN.

3. Procédé selon la revendication 1, dans lequel l'acquisition, par le VTEP d'extrémité de transmission, depuis l'unité de commande centralisée VxLAN, d'une adresse IP d'un VTEP d'extrémité de réception sur le VxLAN comprend les étapes consistant à :
envoyer, par le VTEP d'extrémité de transmission, une demande de requête à l'unité de commande centralisée VxLAN ; et
recevoir, par le VTEP d'extrémité de transmission, une réponse à la requête retournée par l'unité de commande centralisée VxLAN, dans lequel la réponse à la requête achemine des adresses IP de multiples VTEP d'extrémité de réception sur le VxLAN, et les multiples VTEP d'extrémité de réception sont obtenus par l'unité de commande centralisée VxLAN à partir de tous les VTEP sur le VxLAN au moyen d'un filtrage en fonction d'un type du paquet de diffusion ou d'informations de localisation du VTEP d'extrémité de transmission.

4. Procédé selon l'une quelconque des revendications 1 à 3, dans lequel le paquet de diffusion est un paquet de diffusion d'un protocole de résolution d'adresse ARP gratuit, et le procédé comprend en outre l'étape consistant à :
rapporter, par le VTEP d'extrémité de transmission, à l'unité de commande centralisée VxLAN, une adresse IP source et une adresse de contrôle d'accès au support MAC source qui sont acheminées par le paquet de diffusion ARP gratuit.

5. Procédé selon l'une quelconque des revendications 1 à 3, dans lequel le paquet de diffusion est un paquet de diffusion d'un protocole de configuration d'hôte dynamique DHCP, et le procédé comprend en outre les étapes consistant à :
intercepter, par le VTEP d'extrémité de transmission, un paquet de réponses envoyé par un serveur DHCP en réponse au paquet d'unidiffusion, dans lequel le paquet de réponses achemine une adresse IP attribuée par le serveur DHCP à la machine virtuelle d'extrémité de transmission et une adresse MAC, et rapporter, par le VTEP d'extrémité de transmission, à l'unité de commande centralisée VxLAN, l'adresse IP nouvellement attribuée à la machine virtuelle d'extrémité de transmission et l'adresse MAC.

6. Procédé de communication d'un réseau local extensible virtuel, dans lequel le réseau local extensible virtuel VxLAN comprend une unité de commande centralisée VxLAN et de multiples points d'extrémité de tunnel VTEP, et le procédé comprend les étapes consistant à :
recevoir, par l'unité de commande centralisée VxLAN, une demande de requête envoyée par un VTEP d'extrémité de transmission, dans lequel la demande de requête est envoyée à l'unité de commande centralisée VxLAN après que le VTEP d'extrémité de transmission intercepte un paquet de diffusion envoyé par une machine virtuelle d'extrémité de transmission et détermine que le paquet de diffusion n'a pas d'adresse de destination, et la demande de requête achemine un identifiant du VxLAN sur lequel le VTEP d'extrémité transmission est situé ;
déterminer, par l'unité de commande centralisée VxLAN, une adresse IP d'un VTEP d'extrémité de réception sur le VxLAN en fonction de l'identifiant du VxLAN ; et
envoyer, par l'unité de commande centralisée VxLAN, une réponse à la requête au VTEP d'extrémité de transmission, dans lequel la réponse à la requête achemine l'adresse IP du VTEP d'extrémité de réception, de sorte que le VTEP d'extrémité de transmission encapsule le paquet de diffusion dans un paquet d'unidiffusion en fonction de l'adresse IP du VTEP d'extrémité de réception, et envoie le paquet d'unidiffusion au VTEP d'extrémité de réception.

7. Procédé selon la revendication 6, comprenant en outre les étapes consistant à :
préconfigurer, par l'unité de commande centralisée VxLAN, une correspondance entre l'identifiant du réseau VxLAN et des adresses IP de tous les VTEP sur le réseau VxLAN ; et
en conséquence, demander, par l'unité de commande centralisée VxLAN, la correspondance en fonction de l'identifiant du VxLAN, déterminer les adresses IP de tous les VTEP sur le VxLAN, et envoyer une réponse à la requête au VTEP d'extrémité de transmission, dans lequel la réponse à la requête achemine les adresses IP de tous les VTEP.

8. Procédé selon la revendication 7, après la détermination des adresses IP de tous les VTEP sur le VxLAN, comprenant en outre les étapes consistant à :
déterminer, par l'unité de commande centralisée VxLAN, un type du paquet de diffusion, et obtenir, grâce au filtrage en fonction du type du paquet de diffusion ou des informations de localisation du VTEP d'extrémité de transmission, de multiples VTEP d'extrémité de réception provenant de tous les VTEP sur le VxLAN.

9. Procédé selon l'une quelconque des revendications 6 à 8, dans lequel le paquet de diffusion est un paquet de diffusion d'un protocole de résolution d'adresses ARP gratuit, et le procédé comprend en outre les étapes consistant à :
recevoir, par l'unité de commande centralisée VxLAN, une adresse IP source et une adresse de contrôle d'accès au support MAC source qui sont acheminées par le paquet de diffusion ARP gratuit et qui sont rapportées par le VTEP d'extrémité de transmission ; et
stocker, par l'unité de commande centralisée VxLAN, l'adresse IP source et l'adresse MAC source.

10. Procédé selon l'une quelconque des revendications 6 à 8, dans lequel le paquet de diffusion est un paquet de diffusion d'un protocole de configuration d'hôte dynamique DHCP, et le procédé comprend en outre les étapes consistant à :
recevoir, par l'unité de commande centralisée VxLAN, une adresse IP attribuée par un serveur DHCP à la machine virtuelle d'extrémité de transmission et une adresse de contrôle d'accès au support MAC qui sont rapportées par le VTEP d'extrémité de transmission ; et
stocker, par l'unité de commande centralisée VxLAN, l'adresse IP nouvellement attribuée à la machine virtuelle d'extrémité de transmission et l'adresse MAC.

11. Système de communication d'un réseau local extensible virtuel, dans lequel le réseau local extensible virtuel VxLAN comprend une unité de commande centralisée VxLAN et de multiples points d'extrémité de tunnel VTEP, et chaque VTEP et au moins une machine virtuelle gérée par le VTEP forment un sous-réseau du VxLAN ; dans lequel :
un VTEP d'extrémité de transmission est conçu pour intercepter un paquet de diffusion envoyé par une machine virtuelle d'extrémité de transmission, déterminer si le paquet de diffusion n'a pas d'adresse de destination, et si on détermine que le paquet de diffusion n'a pas d'adresse de destination, acquérir, à partir de l'unité de commande centralisée VxLAN, une adresse IP d'un VTEP d'extrémité de réception sur le VxLAN, encapsuler le paquet de diffusion dans un paquet d'unidiffusion en fonction de l'adresse IP du VTEP d'extrémité de réception, et envoyer le paquet d'unidiffusion au VTEP d'extrémité de réception ;
l'unité de commande centralisée VxLAN est conçue pour recevoir une demande de requête envoyée par le VTEP d'extrémité de transmission, déterminer l'adresse IP du VTEP d'extrémité de réception sur le VxLAN, et envoyer une réponse à la requête au VTEP d'extrémité de transmission, dans lequel la réponse à la requête achemine l'adresse IP du VTEP d'extrémité de réception ; et
le VTEP d'extrémité de réception est conçu pour recevoir le paquet d'unidiffusion envoyé par le VTEP d'extrémité de transmission, et diffuser le paquet d'unidiffusion reçu à une extrémité de réception.

12. Système selon la revendication 11, dans lequel l'unité de commande centralisée VxLAN est conçue en outre pour préconfigurer une correspondance entre un identifiant du réseau VxLAN et des adresses IP de tous les VTEP sur le réseau VxLAN ; et
l'unité de commande centralisée VxLAN est conçue spécifiquement pour demander la correspondance en fonction de l'identifiant du VxLAN sur lequel la machine virtuelle d'extrémité de transmission est située, déterminer les adresses IP de tous les VTEP sur le VxLAN, et envoyer une réponse à la requête au VTEP d'extrémité de transmission, dans lequel la réponse à la requête achemine les adresses IP de tous les VTEP.

13. Système selon la revendication 12, dans lequel l'unité de commande centralisée VxLAN est conçue en outre pour déterminer un type du paquet de diffusion, et obtenir, grâce au filtrage en fonction du type du paquet de diffusion ou des informations de localisation du VTEP d'extrémité de transmission, de multiples VTEP d'extrémité de réception provenant de tous les VTEP sur le VxLAN.

14. Système selon l'une quelconque des revendications 11 à 13, dans lequel le paquet de diffusion est un paquet de diffusion d'un protocole de résolution d'adresse ARP gratuit ;
le VTEP d'extrémité de transmission est conçu en outre pour rapporter, à l'unité de commande centralisée VxLAN, une adresse IP source et une adresse de contrôle d'accès au support MAC source qui sont acheminées par le paquet de diffusion ARP gratuit ; et
l'unité de commande centralisée VxLAN est conçue pour recevoir et stocker l'adresse IP source et l'adresse MAC source.

15. Système selon l'une quelconque des revendications 11 à 13, dans lequel le paquet de diffusion est un paquet de diffusion d'un protocole de configuration d'hôte dynamique DHCP;
le VTEP d'extrémité de transmission est conçu en outre pour intercepter un paquet de réponses envoyé par un serveur DHCP en réponse au paquet d'unidiffusion, dans lequel le paquet de réponses achemine une adresse IP attribuée par le serveur DHCP à la machine virtuelle d'extrémité de transmission et une adresse MAC, et rapporter, à l'unité de commande centralisée VxLAN, l'adresse IP nouvellement attribuée à la machine virtuelle d'extrémité de transmission et l'adresse MAC ; et
l'unité de commande centralisée VxLAN est conçue en outre pour recevoir et stocker l'adresse IP nouvellement attribuée à la machine virtuelle d'extrémité de transmission et l'adresse MAC.

16. Appareil de communication d'un réseau local extensible virtuel, dans lequel le réseau local extensible virtuel VxLAN comprend une unité de commande centralisée VxLAN et de multiples points d'extrémité de tunnel VTEP, et le VTEP (50) comprend :
une unité d'interception (501), conçue pour intercepter un paquet de diffusion envoyé par une machine virtuelle d'extrémité de transmission ;
une unité de détermination (503), conçue pour déterminer si le paquet de diffusion n'a pas d'adresse de destination, et si on détermine que le paquet de diffusion n'a pas d'adresse de destination, acquérir, à partir de l'unité de commande centralisée VxLAN, une adresse IP d'un VTEP d'extrémité de réception sur le VxLAN ; et
une unité d'envoi (505), conçue pour encapsuler le paquet de diffusion dans un paquet d'unidiffusion en fonction de l'adresse IP du VTEP d'extrémité de réception, et envoyer le paquet d'unidiffusion au VTEP d'extrémité de réception, de sorte que le VTEP d'extrémité de réception diffuse le paquet d'unidiffusion reçu à une extrémité de réception.

17. Appareil de communication selon la revendication 16, dans lequel le paquet de diffusion est un paquet de diffusion d'un protocole de résolution d'adresse ARP gratuit, et
l'unité d'envoi (505) est conçue en outre pour rapporter, à l'unité de commande centralisée VxLAN, une adresse IP source et une adresse de contrôle d'accès au support MAC source qui sont acheminées par le paquet de diffusion ARP gratuit.

18. Appareil de communication selon la revendication 17, dans lequel le paquet de diffusion est un paquet de diffusion d'un protocole de configuration d'hôte dynamique DHCP;
l'unité d'interception (501) est conçue en outre pour intercepter un paquet de réponses envoyé par un serveur DHCP en réponse au paquet d'unidiffusion, dans lequel le paquet de réponses achemine une adresse IP attribuée par le serveur DHCP à la machine virtuelle d'extrémité de transmission et une adresse MAC ; et
l'unité d'envoi (505) est conçue en outre pour rapporter, à l'unité de commande centralisée VxLAN, l'adresse IP nouvellement attribuée à la machine virtuelle d'extrémité de transmission et l'adresse MAC qui sont acquises par l'unité d'interception (501).

19. Appareil de communication d'un réseau local extensible virtuel, dans lequel le réseau local extensible virtuel VxLAN comprend une unité de commande centralisée VxLAN (60) et de multiples points d'extrémité de tunnel VTEP, et l'unité de commande centralisée VxLAN (60) comprend :
une unité de réception (601), conçue pour recevoir une demande de requête envoyée par un VTEP d'extrémité de transmission, dans lequel la demande de requête est envoyée à l'unité de commande centralisée VxLAN (60) après que le VTEP d'extrémité de transmission intercepte un paquet de diffusion envoyé par une machine virtuelle d'extrémité de transmission et détermine que le paquet de diffusion n'a pas d'adresse de destination, et la demande de requête achemine un identifiant du VxLAN sur lequel le VTEP d'extrémité de transmission est situé ;
une unité de détermination (603), conçue pour déterminer une adresse IP d'un VTEP d'extrémité de réception sur le VxLAN en fonction de l'identifiant du VxLAN ; et
une unité d'envoi (605), conçue pour envoyer une réponse à la requête au VTEP d'extrémité de transmission, dans lequel la réponse à la requête achemine l'adresse IP du VTEP d'extrémité de réception, de sorte que le VTEP d'extrémité de transmission encapsule le paquet de diffusion dans un paquet d'unidiffusion en fonction de l'adresse IP du VTEP d'extrémité de réception, et envoie le paquet d'unidiffusion au VTEP d'extrémité de réception.

20. Appareil de communication selon la revendication 19, dans lequel l'unité de commande centralisée VxLAN (60) comprend en outre une unité de configuration, conçue pour préconfigurer une correspondance entre l'identifiant du réseau VxLAN et des adresses IP de tous les VTEP sur le réseau VxLAN ;
l'unité de détermination (603) est conçue spécifiquement pour demander la correspondance en fonction de l'identifiant du VxLAN sur lequel la machine virtuelle d'extrémité de transmission est située, et déterminer les adresses IP de tous les VTEP sur le VxLAN ; et
l'unité d'envoi (605) est conçue spécifiquement pour envoyer une réponse à la requête au VTEP d'extrémité de transmission, dans lequel la réponse à la requête achemine les adresses IP de tous les VTEP.

21. Appareil de communication selon la revendication 20, dans lequel l'unité de détermination (603) est conçue en outre pour déterminer un type du paquet de diffusion, et obtenir, grâce au filtrage en fonction du type du paquet de diffusion ou des informations de localisation du VTEP d'extrémité de transmission, de multiples VTEP d'extrémité de réception provenant de tous les VTEP sur le VxLAN.

22. Appareil de communication selon l'une quelconque des revendications 19 à 21, dans lequel le paquet de diffusion est un paquet de diffusion d'un protocole de résolution d'adresses ARP gratuit, et l'unité de réception (601) est conçue en outre pour recevoir et stocker une adresse IP source et une adresse de contrôle d'accès au support MAC source qui sont acheminées par le paquet de diffusion ARP gratuit et qui sont rapportées par le VTEP d'extrémité de transmission ; ou
le paquet de diffusion est un paquet de diffusion d'un protocole de configuration d'hôte dynamique DHCP, et l'unité de réception (601) est conçue en outre pour recevoir et stocker une adresse IP attribuée par un serveur DHCP à la machine virtuelle d'extrémité de transmission et une adresse de contrôle d'accès au support MAC qui sont rapportées par le VTEP d'extrémité de transmission.
